# EUROPÄISCHE PATENTSCHRIFT

(11) **EP 1 287 973 B1**
(45) Veröffentlichungstag und Bekanntmachung des Hinweises auf die Patenterteilung: **27.02.2008**
(21) Anmeldenummer: 02017819.0
(22) Anmeldetag: 07.08.2002
(51) Int. Cl.: B29D 23/00, F16L 9/147, B29C 47/02, B21D 49/00, B29C 55/22

(54) **Anordnung sowie Verfahren zum Tiefziehen von Kunststoff-Metall-Kunststoff-Mehrschichtrohren**
Apparatus and process for manufacturing plastic-metal-plastic multilayered tubes
Appareil et procédé de fabrication de tubes multicouches du type plastique-métal-plastique

(30) Priorität: 07.08.2001 DE 10138600
(43) Veröffentlichungstag der Anmeldung: 05.03.2003
(73) Patentinhaber: FRÄNKISCHE ROHRWERKE GEBR. KIRCHNER GmbH & Co KG, D-97486 Königsberg (DE)
(72) Erfinder: Dingler, Harald, 97478 Knetzgau (DE); Müller, Carsten, 36115 Hilders (DE); Schuck, Stefan, 97437 Hassfurt (DE)
(74) Vertreter: Schwabe - Sandmair - Marx

(56) Entgegenhaltungen:
- DE-A- 2 923 544
- DE-A- 3 023 214
- US-A- 4 999 903
- PATENT ABSTRACTS OF JAPAN vol. 007, no. 079 (M-204), 31. März 1983 (1983-03-31) & JP 58 006723 A (SHIN NIPPON SEITETSU KK), 14. Januar 1983 (1983-01-14)

## Beschreibung

Die vorliegende Erfindung betrifft eine Anordnung gemäß dem Anspruch 1, die dazu bestimmt ist, Verbundrohre mit wenigstens einer Metallschicht mit unterschiedlichen Durchmessern herzustellen. Ferner betrifft die Erfindung ein Verfahren zur Herstellung solcher Rohre mit verschiedenen Durchmessern gemäß dem Anspruch 8.

Gemäß dem Stand der Technik werden Verbundrohre mit einer innenliegenden Kunststoffschicht, einer darauf aufgebrachten Metallschicht und einer auf der Metallschicht aufgebrachten Kunststoffschicht beispielsweise als Trinkwasserleitungen eingesetzt. Dabei wird zunächst ein inneres Kunststoffrohr extrudiert (inline oder offline), das mit einem Metallstreifen ummantelt wird. Der Metallstreifen wird mittels eines Haftvermittlers mit dem Kunststoffrohr verbunden. Der Haftvermittler wird vor oder bei dem Ummanteln des Kunststoffrohres mit dem Metallstreifen auf das innere Kunststoffrohr aufgebracht. Anschließend wird der Metallstreifen in Axialrichtung des Rohres verschweißt, so dass sich eine geschlossene Metallschicht ergibt, die um das innere Kunststoffrohr herum angeordnet ist. Anschließend wird die Haftung zwischen dem Metallmantel, dem Haftvermittler und dem darin befindlichen Kunststoffrohr durch eine Reduktion des Durchmessers und Aktivierung des Haftvermittlers durch Wärme des nunmehr zweischichtigen Verbundrohres als Zwischenprodukt verbessert. Daraufhin wird ein äußerer Kunststoffmantel auf das Zwischenprodukt aufgebracht, um ein Endprodukt mit definiertem Rohrinnen- und Rohraußendurchmesser zur Verfügung zu stellen, das als Kunststoff-Metall-Kunststoff-Verbundrohr bekannt ist.

Durch ein weiteres, bereits bekanntes Verfahren wird ein Metallstreifen mit überlappenden Enden vorgeformt, und an diesen verschweißt. In geringen Abstand nach der Form- und Schweißeinrichtung werden die Innen- und Außenrohrschicht mit oder ohne Haftvermittler durch Extrusionsvorgänge aufgetragen.

Dieser Aufwand wird betrieben, um ein Verbundrohr mit einem bestimmten Innen- und Außendurchmesser herzustellen.

Soll ein anderer Rohrinnen- und -außendurchmesser hergestellt werden, müssen andere Herstellungskomponenten zusammengebracht werden, die andere Durchmesser für sämtliche Schichten der anders dimensionierten Verbundrohre ermöglichen.

US 4,999,903 bezieht sich auf ein Verfahren zur Herstellung von Mehrschichtverbundrohren, das Extrudieren eines inneren Kunststoffrohres umfasst, um ein Metallrohr um das innere Kunststoffrohr herum zu bilden, welches anschließend mit einer äußeren Kunststoffschicht bedeckt bzw. ummantelt wird. Das Metallrohr wird zunächst gebildet, um einen Innendurchmesser zu haben, welcher im Wesentlichen größer als der Außendurchmesser des inneren Kunststoffrohres ist. Anschließend wird zum Schweißen, um das Metallblech in der Form eines Rohres abzudichten, der überschüssige Durchmesser des Metallrohres verringert, und zwar in einer Weise, welche Dehnen oder Verlängern des Rohres vermeidet. Klebstoffbeschichtungen können zwischen den verschiedenen einzelnen Schichten der Rohre angewendet bzw. aufgebracht werden, und ein Netzwerk kann zwischen dem Metallrohr und der äußeren Kunststoffschicht eingefügt werden.

DE 29 23 544 bezieht sich auf ein Verfahren zur Herstellung eines Verbundrohres, insbesondere als Abflussrohr für Installationszwecke, das wenigstens aus einem Innenrohr aus Kunststoff, einer dieses umschließenden Zwischenschicht aus Kunststoff und einem metallenen Außenrohr besteht, bei dem das Innenrohr mit dem Kunststoff der Zwischenschicht umhüllt und das Außenrohr diese Zwischenschicht umgebend und in einem Abstand von dieser durch Formung eines Bandmaterials mit Längsnaht und anschließender Längsnahtschweißung aufgebracht und das längsnahtgeschweißte Außenrohr durch in kontinuierlichem Arbeitsablauf unmittelbar anschließende mechanische Verformung von außen unter Verringerung seines Durchmessers mit der Zwischenschicht verbunden wird.

Ausgehend von diesem Stand der Technik hat es sich die Erfindung zur Aufgabe gemacht, ein Verfahren und eine Anordnung zur Herstellung von Verbundrohren mit diversen Durchmessern zur Verfügung zu stellen, die eine noch bessere Haftung zwischen der inneren Kunststoffschicht und der Metallschicht ermöglichen, wobei gleichzeitig diverse verschiedene Durchmesser für Verbundrohre auf einfache Weise zur Verfügung gestellt werden.

Die oben aufgeführte Aufgabe wird mittels einer Anordnung mit den Merkmalen des Anspruchs 1 und einem Verfahren mit den Merkmalen des Anspruchs 8 gemäß der vorliegenden Erfindung gelöst.

Zweckmäßige Ausführungsformen der erfindungsgemäßen Gegenstände ergeben sich aus den Unteransprüchen.

Gemäß der Erfindung beruhen deren Vorteile darauf, dass ein mit einer äußeren Metallschicht versehenes innenliegendes Kunststoffrohr mehreren Reduziereinrichtungen zum

Reduzieren des Durchmessers dieses zweischichtigen Verbundes auf ein Zwischen- bzw. Endmaß des Verbundes ausgesetzt wird. Die mehrfache Reduzierung des Durchmessers des zwei- oder mehrschichtigen Verbundes führt überraschend zu Verbundrohren mit einer äußeren Metallschicht und einer inneren Kunststoffschicht mit nahezu beliebigen Durchmessern ausgehend von einem ersten Durchmesser, der von dem extrudierten Durchmesser des inneren Kunststoffrohres und von der darauf aufgebrachten verschlossene Metallschicht herrührt. Ein auf diese Weise in seinem Durchmesser reduziertes Verbundrohr mit einer äußeren Metallschicht und einer innenliegenden Kunststoffschicht wird, sobald der Innendurchmesser die gewünschte Spezifikation hat, in einen zweiten Extruderabschnitt mit einer äußeren Kunststoffschicht versehen, um das Endprodukt auszubilden.

Gemäß der Erfindung ist es nicht besonders ausschlaggebend, wie das Verbundzwischenprodukt, das durchmesserreduziert wird, hergestellt wird, ob dies zwischengelagert, transportiert oder anderweitig behandelt wird. So kann der Verbund im Sinne des Zwischenprodukts auch hergestellt werden, indem ein Metallband einer Formstation zugeführt wird, wo es zu einem überlappenden Rohr geformt und mit beispielsweise Ultraschall verschweißt wird. Kurz nach dieser Schweißeinrichtung wird das Metallrohr von einem Mehrschichtextrusionskopf umgeben, durch welchen der Haftvermittler und das Kunststoffrohr aufgetragen werden. Innen wird ca. an der gleichen Stelle, an der die Außenschicht aufgebracht wird, über eine Düse/Mehrfachdüse das Innenrohr mit Haftvermittler gegen das Metallrohr extrudiert und mit ca. 6 Bar Innendruck an das Metallrohr gepresst, um eine Haftverbesserung zu erzielen.

Damit lassen sich erfindungsgemäß Verbundrohre als Zwischenprodukt herstellen, auf einen gewünschten Durchmesser einstellen, um dann mittels eines Extruders mit jeweils spezialisierter Extruderdüse oder mit variabler Extruderdüse mit einer äußeren Kunststoffschicht ummantelt zu werden, um das Kunststoff-Metall-Kunststoff-Verbundrohr als Endprodukt zu erhalten.

Mit anderen Worten, es ist möglich, eine Anordnung zur Herstellung eines erfindungsgemäß herzustellenden Verbundrohres für ein Zwischenprodukt mit einer Metallschicht und einer inneren Kunststoffschicht fix einzurichten, wobei für verschiedene Durchmesser lediglich eine passende Anzahl von Reduziervorrichtungen in das Verfahren bzw. die Herstellungsanordnung einzubeziehen ist. Es ist lediglich eine Extrudereinrichtung für die äußere Kunststoffschicht vorzusehen, die eine Kunststoffaußenschicht aufbringen kann, die in ihrem Durchmesser an den Enddurchmesser des Verbundes als Zwischenprodukt angepasst ist. Hier ist der Fachmann frei, entweder einen Extruder mit Variodüse zu verwenden oder aber mehrere Extruder mit unterschiedlichen Düsenquerschnitten.

Natürlich kann zwischen der Metallschicht und der zweiten bzw. äußeren Kunststoffschicht wiederum eine Haftvermittlerschicht vorgesehen werden.

Vorteilhafterweise werden bei der Anordnung gemäß der vorliegenden Erfindung ausreichend Plätze freigelassen, um weitere Reduziereinrichtungen in Laufrichtung des Rohrverbundes aus einer Kunststoffschicht und einer Metallschicht zwischen der ersten Reduziereinrichtung und dem zweiten Extruderabschnitt, bzw. zwischen einer Schweißapparatur, zum Verschweißen des Metallbandes, das um das innere Rohr geformt ist, und dem zweiten Extruderabschnitt anzuordnen. Diese zusätzlichen Plätze können für weitere Reduziereinrichtungen bestimmt sein, die je nach dem gewünschten Reduktionsmaß für den gewünschten Enddurchmesser des Verbundrohres erforderlich sind.

Die Reduziereinrichtungen können von herkömmlicher Art sein, wie sie bereits dem Fachmann geläufig sind. Zum Beispiel können die Reduziereinrichtungen aus gegeneinanderlaufenden Rändern bestehen, die im Querschnitt jeweils einen Halbkreis darstellen, so dass sie in Durchlaufrichtung des Verbundrohres gesehen einen kreisförmigen Querschnitt bilden, durch den der Verbund aus innen befindlichen Kunststoffrohr und darum geformten und verschweißten Metallband hindurchläuft. Der Querschnitt der beiden gegeneinander anliegenden und synchron zueinander in Rohrrichtung laufenden Räder ist natürlich kleiner als der Außenquerschnitt des Verbundes, so dass der Durchmesser des Rohres beim Durchlaufen zwischen den Rädern reduziert wird. Diese Reduktionstechnik ist nur ein Beispiel von diversen anderen Reduktionstechniken bzw. Tiefziehtechniken, die allesamt unter Umständen mit geringen Modifikationen gemäß der Erfindung einsetzbar sind.

Vorteilhafterweise können die Reduziereinrichtungen reversibel an der im vorstehenden Abschnitt besagten Stelle in der Anordnung vorgesehen sein. Es ist auch möglich, die diversen Reduziereinrichtungen fest vorzusehen und bei Bedarf entsprechend viele Reduziereinrichtungen in das Verfahren einzubeziehen bzw. aus dem Verfahren auszuklammern, um einen gewünschten Querschnitt bzw. Innen- und Außendurchmesser für den Verbund und letztendlich für das Kunststoff-Metall-Kunststoff-Verbundrohr zu ermöglichen.

Um im Hinblick auf den Verbund als Zwischenprodukt eine möglichst flexible Weiterverarbeitung gewährleisten zu können um das Endprodukt, das Verbundrohr, herstellen zu können, kann der zweite Extruderabschnitt für die äußere Kunststoffschicht mehrere vorschaltbare Düsenabschnitte aufweisen. Die verschiedenen Durchmesser können sich dadurch ergeben, dass beispielsweise mehrere Düsenquerschnitte für Durchlaufdüsen vorgesehen sind, für die die Zulaufkanäle für die heißplastisch verformbare Kunststoffmasse etwa über Schraubventile zugänglich gemacht werden können. Natürlich ist es auch möglich, einzelne Durchlaufdüsen für einen Extruderabschnitt auswechselbar vorzusehen, d.h., wenn ein anderer Außenquerschnitt des Verbundes, d.h. des Zwischenproduktes, zum Endprodukt verarbeitet werden soll, wird eine andere Durchlaufdüse als Extruderdüse montiert. Hier kann dann der Verbund, d.h. das Zwischenprodukt, durch das offene Zentrum der Düse hindurchlaufen und über einen umlaufenden Ringspalt wird die äußere Kunststoffschicht auf die Metallschicht aufgebracht.

Natürlich ist es auch hier möglich, falls eine noch bessere Haftung zwischen der Metallschicht und der äußeren Kunststoffschicht gewünscht ist, eine Haftvermittlerlage aufzubringen. Dies kann in beliebiger bekannter Weise geschehen, beispielsweise mit einem separaten Extruder, in einem Bad oder dgl.

Gemäß dem erfindungsgemäßen Verfahren zur Herstellung von Kunststoff-Metall-Kunststoff-Verbundrohren ergibt sich überraschenderweise eine Produktvielfalt von verwartbaren Produkten, die ansonsten mit einem wesentlich erhöhten apparativen Aufwand sowie erhöhtem Materialaufwand und demgemäß mit erhöhtem Arbeitsaufwand zu erzielen wäre. Durch die zunächst vorgenommene Reduzierung gemäß dem erfindungsgemäßen Verfahren, wobei erst nach der Reduzierung auf einen gewünschten Durchmesser für den Rohrverbund, das Zwischenprodukt, und die nachträgliche Aufbringung der äußeren Kunststoffschicht zur Herstellung des Verbundrohres lässt sich die angestrebte Produktvielfalt mit resultierenden kommerziell verwertbaren Produkten bewerkstelligen. Bei der Reduzierung des fertiggestellten Verbundrohres, so hat es sich in umfangreichen und aufwändigen Versuchen gezeigt, würde ein kaum verwertbares Produkt entstehen, weil sich gleich oder nach einer gewissen Zeit wenigstens eine der Kunststoffschichten von der Metallschicht wenigstens bereichsweise ablösen würden, da eine Durchmesserreduzierung des fertiggestellten Rohres zu Verspannungen in dem Rohrgefüge führt, die nicht ausgeglichen werden können, so dass eine Ablösung wenigstens der äußeren Kunststoffschicht zu verzeichnen wäre.

Nachfolgend wird die vorliegende Erfindung im Hinblick auf den Stand der Technik und eine vorteilhafte Ausführungsform gemäß der vorliegenden Erfindung näher erörtert, wobei weitere Zielsetzungen, Merkmale und Vorteile gemäß der Erfindung offenbart werden. Es zeigen:
- Fig. 1: eine bevorzugte Ausführungsform gemäß der Erfindung in einer schematischen Blockdarstellung; und
- Fig. 2: eine Anordnung gemäß dem Stand der Technik in einer Blockdarstellung analog zu Fig. 1.

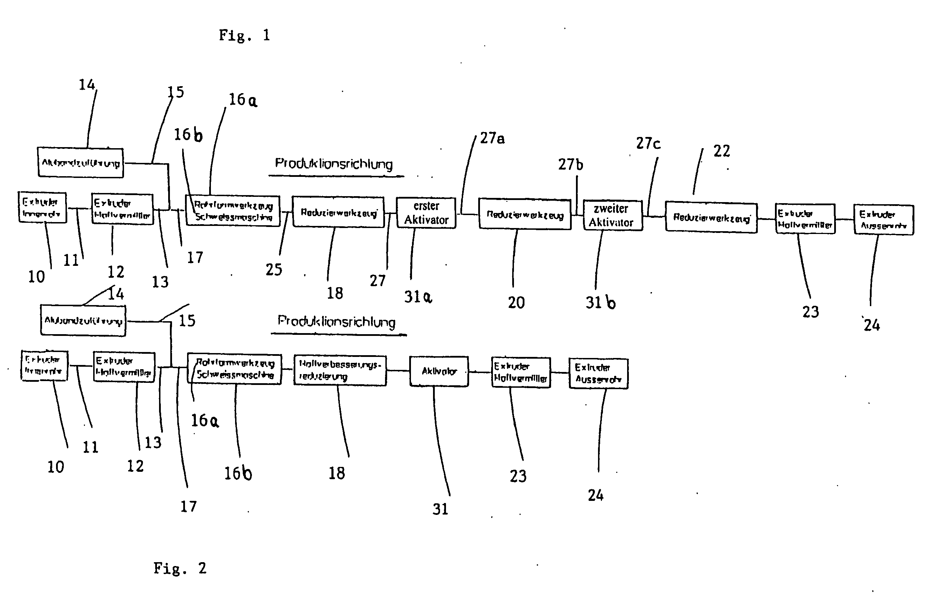

In Fig. 1 ist eine erste Extrusionseinrichtung 10 dargestellt, die ein Kunststoffmaterial zu einem Schlauch bzw. Rohr 11 formt. Dieses innere Rohr 11 bzw. dieser innere Schlauch des späteren Endproduktes kann gekühlt werden, um eine gewisse Festigkeit zu erhalten.

Dies ist jedoch nicht zwangsläufig nötig. Das Rohr 11 läuft in eine Einrichtung 12 ein, über die ein Haftvermittler auf das Rohr aufgebracht werden kann. Das Konstrukt aus einem Haftvermittler und dem inneren Kunststoffrohr, das Zwischenprodukt 13, läuft in eine Formeinrichtung 16a ein, in der ein Metallband, etwa ein Aluminiummetallband 15, zugeführt und um den Verbund aus Kunststoffschicht und Haftvermittlerschicht geformt wird. Das Metallband, insbesondere ein Aluminiumband, kommt von einer Bandzuführungseinrichtung 14. Der Haftvermittler kann hier bereits für eine Haftung des Metallbandes an das Zwischenprodukt 13 sorgen. Auch der Haftvermittler kann mittels eines separaten Extruders aufgebracht werden. Das Zwischenprodukt 13 oder auch das Rohr 11 können auch als Fertigprodukt aus einer anderen Produktionsanlage oder früheren Produktion in die Formeinrichtung 16a eingefahren werden.

Andererseits ist es auch möglich, das Rohr 11 und den Haftvermittler in einem Duo-Extruder integral zu extrudieren, etwa durch einen Coextrusionsprozess.

Das an dem Zwischenprodukt 13 anliegende und dieses ummantelnde Band 15 ergibt eine ersten Verbund 17, der in dem Rohrformwerkzeug 16a um den Verbund 13 ausgeformt wird und dessen überlappende oder auf Stoß anliegende Kanten in einer Schweißeinrichtung 16b miteinander verbunden und zu einem geschlossenen Mantel verarbeitet werden. Der zweischichtige Verbund 25 aus dem geschlossenen Metallband 15, der Haftvermittlerschicht und der innenliegenden Kunststoffschicht wird sodann in eine Einrichtung 18 eingeführt, die eine geringe Durchmesserreduzierung durchführt, um letztendlich aber nur die Haftung zwischen der Metallschicht und dem Haftvermittler und damit zwischen der Metallschicht und dem innenliegenden Rohr 11 zu verbessern. Der Haftvermittler im kompaktierten Verbund 27 kann durch eine Aktivierungseinrichtung 31 zusätzlich beispielsweise thermisch aktiviert werden.

Wie später noch unter Bezugnahme auf Fig. 2 ausgeführt wird, wurde an dieser Stelle im Stand der Technik mit oder ohne zusätzliche Haftvermittlerschicht der Verbund in einen weiteren Extruder 24 eingeführt, der die äußere Kunststoffschicht aufbrachte. Andere Verbundrohre mit abweichenden Durchmessern mussten wiederum mit insgesamt anderen Herstellungskomponenten der Herstellungsanordnung produziert werden.

Gemäß der Erfindung werden nun variabel anordenbare oder variabel ansteuerbare Reduziereinrichtungen 20, 22, usw. vorgesehen, die ebenfalls prinzipiell beliebig ausgebildet sein können. Die hier bei der Reduzierung des Durchmessers auftretenden Spannungen können überraschenderweise von dem Verbund aus Metallschicht, Haftvermittlerschicht und innerer Kunststoffschicht aufgenommen werden. Zusätzlich ist es möglich die Haftvermittlerschicht im Verbund 25, 27a, 27b, 27c nach den einzelnen oder der letzten Reduziereinrichtungen 20,22, usw. mit einer Aktivationseinrichtung 31a, 31b zu aktivieren. Eine in einem letzten Extruder 24 mit einem Querspritzkopf später aufgetragene Kunststoffschicht bildet die Außenschicht. Zwischen der zweiten Kunststoffschicht und dem reduzierten Rohrzwischenprodukt kann noch eine Haftvermittlerschicht mittels eines Extruders 23 aufgetragen werden. Auch können beide Schichten mit einem Duo-Querspritzkopf aufgetragen werden. So entsteht überraschenderweise eine Vielfalt von Produkten mit einem minimierten Apparateaufwand. Die so hergestellte Vielfalt von Verbundrohrdurchmessern ist stabil und lässt sich mit der Qualität herkömmlich hergestellter Verbundrohrdurchmesser realisieren. Bei großen Durchmesserreduktionen entsteht auch eine Längenerstreckung des Verbundrohres, was zu einer höheren Produktivität führen kann.

Die Darstellung gemäß Fig. 2 verdeutlicht die Vorgehensweise gemäß dem Stand der Technik, durch den jedoch immer jeweils nur ein Verbundrohrdurchmesser hergestellt worden ist. Wie zu erkennen ist, sind die Komponenten der Anordnung gemäß Fig. 2 größtenteils die gleichen wie die Komponenten gemäß Fig. 1.

Zwischen der Schweißeinrichtung 16b und dem zweiten Extruder 24 ist lediglich nur zur Verbesserung der Haftung der Metallschicht an der Kunststoffschicht bzw. an der Haftvermittlerschicht eine Durchmesserreduziereinrichtung 18 und ein Aktivator 31 vorgesehen.

## Patentansprüche

1. Anordnung zur Herstellung von Mehrschichtrohren mit mehreren Durchmessern,
a) mit einer Formungsanlage, die ein Mehrschichtrohr mit einer innenliegenden Kunststoffschicht und einer darum herum angeordneten Metallschicht hergestellt;
b) mit einem ersten Extruderabschnitt (10) zur Herstellung der innenliegenden Kunststoffschicht;
c) mit einer Metallbandzuführeinrichtung (14);
d) mit einer Schweiß- und Formeinrichtung (16a, 16b) zum Schließen eines Metallbandes (15) in Axialrichtung des Kunststoffrohres (11) zur Herstellung der um die innenliegende Kunststoffschicht geschlossenen Metallschicht, wobei sich ein zweischichtiger Verbund (25) ergibt;
e) mit mindestens einer Reduziereinrichtung (18) zum Reduzieren des Durchmessers des zweischichtigen Verbundes (25) auf ein Zwischen- bzw. Endmaß des zweischichtigen Verbundes (25);
f) mit einem zweiten Extruderabschnitt (24) zum Erzeugen der äußeren Kunststoffschicht
g) mit einer ersten Haftvermittleraktivatorstation (31; 31 a) zwischen der Reduziereinrichtung (18) und dem zweiten Extruderabschnitt (24), **dadurch gekennzeichnet, dass**
h) die weitere oder weiteren Reduziereinrichtungen (20, 22) reversibel zwischen der ersten Reduziereinrichtung (18) und dem zweiten Extruderabschnitt (24) in Laufrichtung des zweischichtigen Verbundes (25) einfügbar sind und/oder mit dem zweischichtigen Verbund (25) ansteuerbar sind, wobei zwischen der ersten Reduziereinrichtung (18) und dem zweiten Extruderabschnitt (24) eine zweite Haftvermittleraktivatorstation (31 b) oder die erste Haftvermittleraktivatorstation (31 a) und die zweite Haftvermittleraktivatorstation (31b) vorgesehen ist, um eine Haftvermittlerschicht in dem Verbund (25) nach den einzelnen weiteren Reduziereinrichtungen (20, 22) beispielsweise durch Druck und/oder Hitze zu aktivieren.

2. Anordnung nach Anspruch 1, **dadurch gekennzeichnet, dass** die Formungsanlage umfasst:
- eine Metallrohrformungseinrichtung;
- eine Kunststoffextrusions- bzw. -spritzeinrichtung, die eine Kunststoffschicht in ein durch die Metallformungsanlage gebildetes Metallrohr einbringt; und eine Druckerzeugungseinrichtung, die einen Druck innerhalb des Kunststoffrohres (11) mit der äußeren Metallschicht und der inneren Kunststoffschicht erzeugt, um für eine Haftverbesserung zu sorgen.

3. Anordnung nach Anspruch 2, **dadurch gekennzeichnet, dass** zwischen dem ersten Extruderabschnitt (10) und der Schweiß- und Formeinrichtung (16a, 16b) eine Haftvermittlerschicht-Auftragseinrichtung (12) vorgesehen ist.

4. Anordnung nach einem der Ansprüche 1 bis 3, **dadurch gekennzeichnet, dass** der zweite Extruderabschnitt (24) für die äussere Kunststoffschicht mehrere vorschaltbare Düsenabschnitte für unterschiedliche Durchmesser aufweist.

5. Anordnung nach einem der Ansprüche 1 bis 3, **dadurch gekennzeichnet, dass** eine Verbundfiihrungsvorrichtung vorgesehen ist, um den zweischichtigen Verbund (25) zu einem von mehreren zweiten Extruderabschnitten zu führen, der eine äussere Kunststoffschicht um den durchmesserreduzierten zweischichtigen Verbund (25) aufträgt.

6. Anordnung nach einem der Ansprüche 1 bis 5, **dadurch gekennzeichnet, dass** die Haftvermittlerschicht in dem zweischichtigen Verbund (25) nach den einzelnen und/oder der letzten Reduziereinrichtungen (20, 22), usw. mit der zweiten Haftvermittleraktivatorstation (31 b) oder der ersten Haftvermittleraktivatorstation (31 a) und der zweiten Haftvermittleraktivatorstation (31 b) zu aktivieren ist.

7. Anordnung nach einem der Ansprüche 1 und 3 bis 6, **dadurch gekennzeichnet, dass** zwischen dem ersten Extruderabschnitt (10) und der Metallbandzuführeinrichtung (14) eine Haftvermittlerschicht-Auftragseinrichtung (12) vorgesehen ist, insbesondere ein Extruder.

8. Verfahren zur Herstellung von Kunststoff-Metall-Kunststoff-Mehrschichtrohren mit verschiedenen Durchmessern mit den folgenden Schritten:
a) ein zweischichtiger Verbund (25) aus einem Kunststoffrohr (11) und einem Metallmantel wird ausgebildet;
b) die Haftung zwischen dem Metallmantel und dem Kunststoffrohr wird mittels einer Kompaktierung durch eine erste Reduziereinrichtung (18) verbessert;
c) der zweischichtige Verbund (25) wird in seinem Durchmesser auf ein gewünschtes Durchmessermaß reduziert;
d) Verbesserung der Haftung des Metallmantels an dem Kunststoffrohr (11) durch eine erste Haftvermittleraktivatorstation (31; 31a) zwischen der Reduziereinrichtung (18) und dem zweiten Extruderabschnitt (24);
e) nach der Reduzierung des Durchmessers auf ein gewünschtes Durchmessermaß wird der zweischichtige Verbund (25) mit einer äußeren Kunststoffschicht umgeben, **dadurch gekennzeichnet,**
f) **dass** der Durchmesser des Verbundes (27) schrittweise durch mehrere hintereinander geschaltete erste (18) und weitere (20, 22) Reduziereinrichtungen verringert wird, beispielsweise in Durchmesserreduzierschritten von 0,1 bis 0,8 mm, insbesondere von 0,3 mm wobei eine zweite Haftvermittleraktivatorstation (31b) oder die erste Haftvermittleraktivatorstation (31 a) und die zweite Haftvermittleraktivatorstation (31b), die zwischen der ersten Reduziereinrichtung (18) und dem zweiten Extruderabschnitt (24) vorgesehen ist oder sind, einen Haftvermittler in dem zweischichtigen Verbund (25) nach den einzelnen weiteren Reduziereinrichtungen (20, 22) beispielsweise durch Druck und/oder Hitze aktiviert.

9. Verfahren nach Anspruch 8, **dadurch gekennzeichnet, dass** ein Metallband bzw. - streifen (15) um das Kunststoffrohr (11) gelegt wird und das Metallband bzw. der Metallstreifen (15) insbesondere durch Verschweissen oder eine stoffformschlüssige Verbindung zu einem geschlossenen Metallmantel gewandelt wird.

10. Verfahren nach Anspruch 8, **dadurch gekennzeichnet, dass** auf das extrudierte Kunststoffrohr (11) eine Haftvermittlerschicht aufgebracht wird, bevor das Metallband bzw. der Metallstreifen (15) vorgesehen wird.

11. Verfahren nach einem der Ansprüche 8 bis 10, **dadurch gekennzeichnet, dass** auf den reduzierten Verbund (25) eine Haftvermittlerschicht aufgebracht wird, bevor die Kunststoffaussenschicht aufgebracht, insbesondere extrudiert wird.

## Claims

1. Arrangement for producing multilayered tubes having a plurality of diameters,
a) comprising a forming installation which produces a multilayered tube with an inner plastic layer and a metal layer arranged around the latter;
b) comprising a first extruder section (10) for producing the inner plastic layer;
c) comprising a metal strip supply device (14);
d) comprising a welding and forming device (16a, 16b) for closing a metal strip (15) in the axial direction of the plastic tube (11) in order to produce the metal layer closed around the inner plastic layer, resulting in a two-layer assembly (25);
e) comprising at least one reducing device (18) for reducing the diameter of the two-layer assembly (25) to an intermediate or final dimension of the two-layer assembly (25);
f) comprising a second extruder section (24) for producing the outer plastic layer;
g) comprising a first adhesion promoter activator station (31; 31a) between the reducing device (18) and the second extruder section (24), **characterised in that**
h) the further reducing device (s) (20, 22) can be reversibly inserted between the first reducing device (18) and the second extruder section (24) in the running direction of the two-layer assembly (25) and/or can be actuated by the two-layer assembly (25), wherein a second adhesion promoter activator station (31b) or the first adhesion promoter activator station (31a) and the second adhesion promoter activator station (31b) is provided between the first reducing device (18) and the second extruder section (24) in order to activate an adhesion promoter layer in the assembly (25) after the individual further reducing devices (20, 22) for example by means of pressure and/or heat.

2. Arrangement according to claim 1, **characterised in that** the forming installation comprises:
- a metal tube forming device;
- a plastic extrusion or injection device which introduces a plastic layer into a metal tube formed by the metal forming installation; and a pressure generating device which generates a pressure within the plastic tube (11) comprising the outer metal layer and the inner plastic layer in order to improve the adhesion.

3. Arrangement according to claim 2, **characterised in that** an adhesion promoter layer application device (12) is provided between the first extruder section (10) and the welding and forming device (16a, 16b).

4. Arrangement according to one of claims 1 to 3, **characterised in that** the second extruder section (24) for the outer plastic layer has a plurality of preselectable die sections for different diameters.

5. Arrangement according to one of claims 1 to 3, **characterised in that** an assembly guiding device is provided in order to guide the two-layer assembly (25) to one of a plurality of second extruder sections, which applies an outer plastic layer around the diameter-reduced two-layer assembly (25).

6. Arrangement according to one of claims 1 to 5, **characterised in that** the adhesion promoter layer in the two-layer assembly (25) must be activated after the individual and/or the last reducing devices (20, 22), etc. by the second adhesion promoter activator station (31b) or the first adhesion promoter activator station (31a) and the second adhesion promoter activator station (31b).

7. Arrangement according to one of claims 1 and 3 to 6, **characterised in that** an adhesion promoter layer application device (12), in particular an extruder, is provided between the first extruder section (10) and the metal strip supply device (14).

8. Method for producing plastic/metal/plastic multilayered tubes with different diameters, comprising the following steps:
a) a two-layer assembly (25) consisting of a plastic tube (11) and a metal covering is formed;
b) the adhesion between the metal covering and the plastic tube is improved by compacting by a first reducing device (18);
c) the diameter of the two-layer assembly (25) is reduced to a desired diameter;
d) the adhesion of the metal covering to the plastic tube (11) is improved by a first adhesion promoter activator station (31; 31a) between the reducing device (18) and the second extruder section (24);
e) after reducing the diameter to a desired diameter the two-layer assembly (25) is surrounded by an outer plastic layer, **characterised in that**
f) the diameter of the assembly (27) is reduced in steps, for example in diameter reduction steps of 0.1 to 0.8 mm, in particular 0.3 mm, by a plurality of first (18) and further (20, 22) reducing devices connected one behind the other, wherein a second adhesion promoter activator station (31b) or the first adhesion promoter activator station (31a) and the second adhesion promoter activator station (31b), which is or are provided between the first reducing device (18) and the second extruder section (24), activate(s) an adhesion promoter in the two-layer assembly (25) after the individual further reducing devices (20, 22), for example by means of pressure and/or heat.

9. Method according to claim 8, **characterised in that** a metal strip (15) is placed around the plastic tube (11) and the metal strip (15) is transformed into a closed metal covering in particular by welding or by a material connection.

10. Method according to claim 8, **characterised in that** an adhesion promoter layer is applied to the extruded plastic tube (11) before the metal strip (15) is provided.

11. Method according to one of claims 8 to 10, **characterised in that** an adhesion promoter layer is applied to the reduced assembly (25) before the plastic outer layer is applied, in particular extruded.

## Revendications

1. Appareil de fabrication de tubes multicouches avec plusieurs diamètres,
a) avec une installation de formage, qui produit un tube multicouche avec une couche de plastique interne et une couche de métal disposée autour de celle-ci;
b) avec une première section d'extrudeuse (10) pour la production de la couche de plastique interne;
c) avec un dispositif d'introduction de bande de métal (14);
d) avec un dispositif de soudage et de formage (16a, 16b) pour fermer une bande de métal (15) en direction axiale du tube de plastique (11) pour la fabrication de la couche de métal fermée autour de la couche de plastique interne, formant ainsi un composite à deux couches (25);
e) avec au moins un dispositif de réduction (18) pour réduire le diamètre du composite à deux couches (25) à une mesure intermédiaire ou finale du composite à deux couches (25);
f) avec une deuxième section d'extrudeuse (24) pour produire la couche de plastique externe;
g) avec une première station d'activateur d'agent adhésif (31; 31a) entre le dispositif de réduction (18) et la deuxième section d'extrudeuse (24);
**caractérisé en ce que**
h) le ou les autres dispositifs de réduction (20, 22) peuvent être intégrés de manière réversible entre le premier dispositif de réduction (18) et la deuxième section d'extrudeuse (24) dans la direction de défilement du composite à deux couches (25) et/ou peuvent être commandés avec le composite à deux couches (25), dans lequel il est prévu, entre le premier dispositif de réduction (18) et la deuxième section d'extrudeuse (24), une deuxième station d'activateur d'agent adhésif (31b) ou la première station d'activateur d'agent adhésif (31a) et la deuxième station d'activateur d'agent adhésif (31b), afin d'activer une couche d'agent adhésif dans le composite (25), par exemple par la pression et/ou la chaleur, après les autres dispositifs de réduction individuels (20, 22).

2. Appareil selon la revendication 1, **caractérisé en ce que** l'installation de formage comprend:
- un dispositif de formage de tube de métal;
- un dispositif d'extrusion ou d'injection de, matière plastique, qui introduit une couche de plastique dans un tube de métal formé par l'installation de formage de métal; et
- un dispositif de production de pression, qui produit une pression à l'intérieur du tube de plastique (11) comprenant la couche de métal externe et la couche de plastique interne, afin d'assurer une amélioration de l'adhérence.

3. Appareil selon la revendication 2, **caractérisé en ce qu'**il est prévu un dispositif d'application d'une couche d'agent adhésif (12) entre la première section d'extrudeuse (10) et le dispositif de soudage et de formage (16a, 16b).

4. Appareil selon l'une quelconque des revendications 1 à 3, **caractérisé en ce que** la deuxième section d'extrudeuse (24) pour la couche de plastique externe comprend plusieurs sections de buse commutables pour différents diamètres.

5. Appareil selon l'une quelconque des revendications 1 à 3, **caractérisé en ce qu'**il est prévu un dispositif de guidage du composite, pour guider le composite à deux couches (25) vers l'une de plusieurs autres sections d'extrudeuse, qui dépose une couche de plastique externe autour du composite à deux couches (25) de diamètre réduit.

6. Appareil selon l'une quelconque des revendications 1 à 5, **caractérisé en ce que** la couche d'agent adhésif dans le composite à deux couches (25) est activée avec la deuxième station d'activateur d'agent adhésif (31b) ou avec la première station d'activateur d'agent adhésif (31a) et la deuxième station d'activateur d'agent adhésif (31b), après les dispositifs de réduction individuels et/ou après le dernier de deux-ci (20, 22, etc.).

7. Appareil selon l'une quelconque des revendications 1 et 3 à 6, **caractérisé en ce qu'**il est prévu un dispositif de dépôt d'une couche d'agent adhésif (12), en particulier une extrudeuse, entre la première section d'extrudeuse (10) et le dispositif d'introduction de bande de métal (14).

8. Procédé de fabrication de tubes multicouches plastique-métal-plastique avec différents diamètres, comprenant les étapes suivantes:
a) on forme un composite à deux couches (25) constitué d'un tube de plastique (11) et d'une gaine de métal;
b) on améliore l'adhérence entre la gaine de métal et le tube de plastique au moyen d'un compactage par un premier dispositif de réduction (18);
c) on réduit le diamètre du composite à deux couches (25) à une dimension de diamètre désirée;
d) on améliore l'adhérence de la gaine de métal sur le tube de plastique (11) par une première station d'activateur d'agent adhésif (31; 31a) entre le dispositif de réduction (18) et la deuxième section d'extrudeuse (24);
e) après la réduction du diamètre à une dimension de diamètre désirée, on entoure le composite à deux couches (25) avec une couche de plastique externe;
**caractérisé en ce que**
f) on réduit le diamètre du composite (27) pas à pas au moyen d'un premier (18) et de plusieurs autres (20, 22) dispositifs de réduction installés l'un derrière l'autre, par exemple par des pas de réduction du diamètre de 0,1 à 0,8 mm, en particulier de 0,3 mm, dans lequel une deuxième station d'activateur d'agent adhésif (31b) ou la première station d'activateur d'agent adhésif (31a) et la deuxième station d'activateur d'agent adhésif (31b), qui est/sont prévue(s) entre le premier dispositif de réduction (18) et la deuxième section d'extrudeuse (24), active(nt) un agent adhésif dans le composite à deux couches (25), par exemple par la pression et/ou la chaleur, après les divers autres dispositifs de réduction (20, 22).

9. Procédé selon la revendication 8, **caractérisé en ce que** l'on pose une bande ou un ruban de métal (15) autour du tube de plastique (11) et on transforme la bande ou le ruban de métal (15) en une gaine de métal fermée en particulier par soudage ou par un assemblage par complémentarité de forme et de matière.

10. Procédé selon la revendication 8, **caractérisé en ce que** l'on dépose une couche d'agent adhésif sur le tube de plastique extrudé (11), avant de prévoir la bande ou le ruban de métal (15).

11. Procédé selon l'une quelconque des revendications 8 à 10, **caractérisé en ce que** l'on dépose une couche d'agent adhésif sur le composite réduit (25), avant de déposer, en particulier avant d'extruder, la couche de plastique externe.
